# EUROPÄISCHE PATENTSCHRIFT

(11) **EP 1 757 194 B1**
(45) Veröffentlichungstag und Bekanntmachung des Hinweises auf die Patenterteilung: **12.11.2008**
(21) Anmeldenummer: 06017123.8
(22) Anmeldetag: 17.08.2006
(51) Int. Cl.: A23L 1/30

(54) **Verwendung von Gemischen aus Polyphenolen und physiologisch aktiven ungesättigten Fettstoffen**
Use of mixtures of polyphenols and physiologically active unsaturated fatty acids
Utilisation de mélanges de polyphénols et d'acides gras insaturés physiologiquement actifs

(30) Priorität: 26.08.2005 DE 102005040463
(43) Veröffentlichungstag der Anmeldung: 28.02.2007
(73) Patentinhaber: Cognis IP Management GmbH, 40589 Düsseldorf (DE)
(72) Erfinder: Buchwald-Werner, Sybille, 40589 Düsseldorf (DE); Alaoui Ismaili, Smail, 08290 Cardanyola del Vallès (ES)

(56) Entgegenhaltungen:
- EP-A- 1 362 518
- EP-A- 1 504 671
- EP-A- 1 523 895
- EP-A- 1 541 037
- WO-A-01/28523
- WO-A-20/04089114
- US-A1- 2002 164 398
- DATABASE BIOSIS [Online] BIOSCIENCES INFORMATION SERVICE, PHILADELPHIA, PA, US; 1990, HAYASHI E ET AL: "PHARMACOLOGICAL ACTION OF TEA EXTRACT ON THE CENTRAL NERVOUS SYSTEM IN MICE" XP002410156 Database accession no. PREV199191088588 & OYO YAKURI, Bd. 40, Nr. 3, 1990, Seiten 351-358, ISSN: 0300-8533

## Beschreibung

### Gebiet der Erfindung

Die Erfindung befindet sich auf dem Gebiet der Nahrungsmittelzusatzstoffe und betrifft die Verwendung von speziellen Wirkstoffgemischen, mit denen sich die Bioverfügbarkeit von Koffein für den menschlichen Organismus verbessern lässt sowie entsprechende Nahrungsmittelergänzungsstoffe.

### Stand der Technik

Koffein (auch Coffein oder veraltet als Thein und Teein bezeichnet) stellt ein Purin-Alkaloid dar, das als anregend wirkender Bestandteil in Genussmitteln wie Kaffee, Tee, Cola, Mate, Guarana, Energy Drinks und Schokolade enthalten ist. Es ist sicher eines der ältesten, wirksamsten und am besten verträglichen Aufputschmittel. Eine Tasse Tee kann je nach Zubereitungsart bis zu 50 mg Koffein enthalten. Die anregende Wirkung des Koffeins beruht in erster Linie auf seiner Bindung als Antagonist an Adenosinrezeptoren vom A₁- und A_{2A}-Typ, die im Zentralnervensystem vorkommen. Koffein ist dem Adenosin-Molekül ähnlich genug, um an die Rezeptoren anzudocken, aber nicht ähnlich genug, um sie auszulösen. Die Koffeinmoleküle "verstopfen" sozusagen die Rezeptoren, die dann für das Andocken von Adenosin nicht mehr zur Verfügung stehen. Dadurch wird die ruhig stellende Wirkung des Adenosins kompetitiv gehemmt und die neuronale Aktivität erhöht; statt hemmend wie das ADP wirkt es also aktivierend auf eine wichtige Signalkaskade innerhalb der Zielzelle. Eine weitere Anwendung findet Koffein seit einiger Zeit auch als Nahrungsergänzungsmittel oder funktionelles Lebensmittel, da es die Fettverbrennung steigert.

Aus physiologischer Sicht ist es wünschenswert, den aktivierenden Effekt, den Koffein auf den Organismus ausübt, mit möglichst kleinen Gaben über einen möglichst langen Zeitraum auf hohem Level aufrecht zu erhalten. Tatsächlich beobachtet man jedoch, dass es bei der Aufnahme von Koffein, beispielsweise beim Genuss von Tee, zu einer kurzzeitigen Spitzenkonzentration kommt, die dann aber sehr rasch abfällt. In der Vergangenheit hat man versucht dem Problem der zeitlich begrenzten Bioverfügbarkeit dadurch abzuhelfen, dass man Koffein oder koffeinhaltige Pflanzenextrakte in einer geeigneten Matrix verkapselt und nach oraler Aufnahme eine verzögerte und somit länger anhaltende Freisetzung erreicht. Diese Versuche waren aber aus verschiedenen Gründen nicht sonderlich erfolgreich: entweder zersetzten sich die Kapseln unter den unterschiedlichen pH-Wert-Bedingungen bei der oralen Aufnahme spontan oder aber sie erwiesen sich als so beständig, dass es überhaupt nicht zu einer dosierten und daher kontrollierten Freisetzung kam.

"Pharmacological action of tea extract on the central nervous system in mice", Pharmacometrics 40(3) 1990, 351 - 358, von E. Hayashi und Mitarbeitern offenbart, dass ein polyphenol- und koffeinhaltiges Gemisch (Tee-extrakt) eine stärkere stimulierende Wirkung besitzt als Koffein allein.

EP-A-1541037 offenbart Nahrungsergänzungsstoffe bestehend aus polyphenolhaltigen Pflanzenextrakten (Extrakte von *Passiflora Incarnata*), physiologisch aktiven ungesättigten Fettsäuren und weiteren Pflanzenextrakten, darunter zum Beispiel grüner Tee, in Gewichtsverhältnissen von 90:10 - 10:90 Gew. % welche mit Hilfsmitteln formuliert werden (Gelatinekapseln).

Die Aufgabe der vorliegenden Erfindung hat daher zum einen darin bestanden, die Bioverfügbarkeit von Koffein, das in Form von koffeinreichen Pflanzenextrakten aufgenommen wird, dahingehend zu verbessern, dass eine hohe Konzentration über einen möglichst langen Zeitraum eingestellt wird. Gleichzeitig sollten die Probleme des Stands der Technik, die mit der Verkapselung von Pflanzenextrakten zur verzögerten Freisetzung verbunden sind, vermieden werden.

### Beschreibung der Erfindung

Gegenstand der Erfindung ist die Verwendung von Gemischen aus
(a) Polyphenolen bzw. pflanzlichen Extrakten, die reich an Polyphenolen sind, und
(b) physiologisch aktiven ungesättigten Fettstoffen
zur Verbesserung der Bioverfügbarkeit von Koffein in Zubereitungen mit einem Gehalt an koffeinreichen pflanzlichen Extrakten.

Überraschenderweise wurde gefunden, dass die Zugabe von Gemischen der Komponenten (a) und (b), insbesondere aber die Mischung von Traubensaat Extrakten und konjugierter Linolsäure zu einer verbesserten Kinetik bei der Aufnahme von Koffein in Zubereitungen führt, die koffeinhaltige Pflanzenextrakte, speziell Extrakte des Grünen Tees enthalten. Insbesondere die typische hohe, aber kurz anhaltende Spitzenkonzentration kann auf diesem Wege vermieden werden. Die Konzentration steigt vielmehr über einen Zeitraum von 3 bis 5 Stunden langsam an und bleibt dann über einen Zeitraum von mindestens 12 und bis zu 24 Stunden praktisch konstant, ehe sie allmählich abfällt. Durch die längere Verfügbarkeit wird also ein Effekt erreicht, wie er ansonsten nur durch verzögerte Freisetzung aus verkapselten Wirkstoffzubereitungen erzielt werden kann.

### Polyphenole und diese enthaltende pflanzliche Extrakte

Polyphenole, die als Komponente (a) in Frage kommen, stellen in erster Linie oligomere Procyanolidine (OPC) dar. Die ersten OPC wurden von Masquellier aus Traubensaaten isoliert. Sie enthalten als Monomerbausteine die im Pflanzenreich weit verbreiteten Tannine. Chemisch betrachtet können zwei Typen von Tanninen unterschieden werden, nämlich kondensierte Formen zu denen auch das Procyanidin A2 gehört, und hydrolysierbare Tannine. Kondensierte Tannine, die auch als Flavolane bezeichnet werden, entstehen in der Biosynthese durch Kondensation von Monomeren, wie z.B. Catechin, Gallocatechin, Afzelechin (2-R, 3-S Typ Monomere) sowie Epicatechin, Epigallocatechin und Epiafzelechin (2-R, 3-R Typ Monomere). Durch Kondensation der Monomeren entstehen zunächst Dimere und dann höhere Oligomere, wobei die Kondensation durch Ausbildung einer C-C-Bindung in 4-8 bzw. 6-8-Position erfolgt. Im Fall der bevorzugten A2-Dimere vom Typ des Proanthocyanidin A2 gibt es eine doppelte Bindung, nämlich C2->O->C7 und C4->C8. Die Struktur ist in der folgenden Abbildung wiedergegeben:

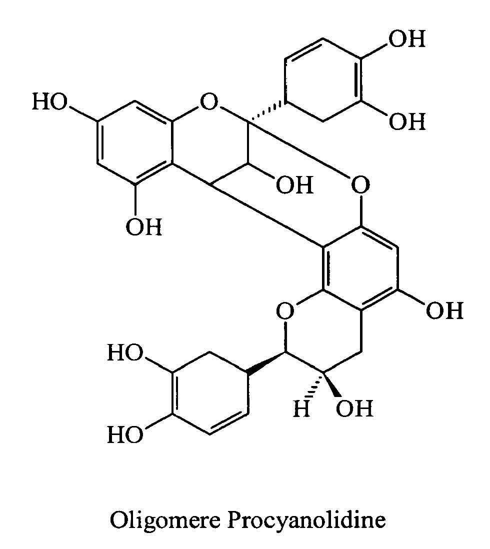

Die A2-Typ Proanthocyanidine sind weniger hydrolyseanfällig als die B-Typen. Im Übrigen wird dieser Begriff synonym für die Gruppe der kondensierten Tannine verwendet, da diese unter dem Einfluss heißer Mineralsäuren Monomere abspalten. Die Proanthocyanidine können grundsätzlich synthetischer Natur sein, aus praktischer Sicht kommen jedoch vorzugsweise Anreicherungsprodukte mit einer wirksamen Menge der OPC bzw. A2-Dimeren in Frage, die durch Extraktion von bestimmten Früchten, Saaten, Pflanzen oder Pflanzenteilen gewonnen werden können. Als Quellen kommen insbesondere Pinienrinde *(Pinia silvestris),* Traubensaat *(Vitis vinifera)* und daneben Litchi pericarp *(Litchi chinensis) ,* Potentille *(Potentille erecta,)* Ginkgoblätter *(Ginkgo biloba)* und Bilberry bzw. Blaubeere *(Vaccinum myrtillus)* sowie deren Gemische in Betracht.

Die Herstellung der Extrakte kann in an sich bekannter Weise erfolgen, d.h. beispielsweise durch wässrigen, alkoholischen oder wässrig-alkoholischen Auszug der Pflanzen bzw. Pflanzenteile bzw. der Blätter, der Samen, der Wurzel oder Früchte. Geeignet sind alle herkömmlichen Extraktionsverfahren wie z.B. Mazeration, Remazeration, Digestion, Bewegungsmazeration, Wirbelextraktion, Ultraschallextraktion, Gegenstromextraktion, Perkolation, Reperkolation, Evakolation (Extraktion unter vermindertem Druck), Diakolation oder Festflüssig-Extraktion unter kontinuierlichem Rückfluss. Für den großtechnischen Einsatz vorteilhaft ist die Perkolationsmethode. Als Ausgangsmaterial können frische Pflanzen oder Pflanzenteile eingesetzt werden, üblicherweise wird jedoch von getrockneten Pflanzen und/oder Pflanzenteilen ausgegangen, die vor der Extraktion mechanisch zerkleinert werden können. Hierbei eignen sich alle dem Fachmann bekannten Zerkleinerungsmethoden, als Beispiel sei die Gefriermahlung genannt. Als Lösungsmittel für die Durchführung der Extraktionen können organische Lösungsmittel, Wasser (vorzugsweise heißes Wasser einer Temperatur von über 80 °C und insbesondere von über 95 °C) oder Gemische aus organischen Lösungsmitteln und Wasser, insbesondere niedermolekulare Alkohole mit mehr oder weniger hohen Wassergehalten, verwendet werden. Besonders bevorzugt ist die Extraktion mit Methanol, Ethanol, Pentan, Hexan, Heptan, Aceton, Propylenglykolen, Polyethylenglykolen und Ethylacetat, Mischungen hieraus sowie deren wässrige Gemische. Die Extraktion erfolgt in der Regel bei 20 bis 100 °C, bevorzugt bei 30 bis 90 °C, insbesondere bei 60 bis 80 °C. In einer bevorzugten Ausführungsform erfolgt die Extraktion unter Inertgasatmosphäre zur Vermeidung der Oxidation der Wirkstoffe des Extraktes. Dies ist insbesondere bei Extraktionen bei Temperaturen über 40 °C von Bedeutung. Die Extraktionszeiten werden vom Fachmann in Abhängigkeit vom Ausgangsmaterial, dem Extraktionsverfahren, der Extraktionstemperatur, vom Verhältnis Lösungsmittel zu Rohstoff u.a. eingestellt. Nach der Extraktion können die erhaltenen Rohextrakte gegebenenfalls weiteren üblichen Schritten, wie beispielsweise Aufreinigung (Chromatographie), Konzentration und/oder Entfärbung unterzogen werden. Falls wünschenswert, können die so hergestellten Extrakte beispielsweise einer selektiven Abtrennung einzelner unerwünschter Inhaltsstoffe, unterzogen werden. Die Extraktion kann bis zu jedem beliebigen Extraktionsgrad erfolgen, wird aber gewöhnlich bis zur Erschöpfung durchgeführt. Typische Ausbeuten (= Trockensubstanzmenge der Extrakte bezogen auf eingesetzte Rohstoffinenge) bei der Extraktion von z.B. getrockneten Blättern liegen im Durchschnitt im Bereich von 3 bis 15, insbesondere 6 bis 10 Gew.-%. Diese Extrakte, die in der Regel Aktivsubstanzgehalte (= Feststoffgehalte) im Bereich von 0,5 bis 10 Gew.-% aufweisen, können als solche eingesetzt werden, es ist jedoch ebenfalls möglich, das Lösungsmittel durch Trocknung, insbesondere durch Sprüh- oder Gefriertrocknung vollständig zu entfernen, wobei ein intensiv rot gefärbter Feststoff zurückbleibt. Die Extrakte können auch als Ausgangsstoffe für die Gewinnung der oben genannten reinen Wirkstoffe dienen, sofern diese nicht auf synthetischem Wege einfacher und kostengünstiger hergestellt werden können. Die Extrakte selbst können als wässrige und/oder in organischen Solventien gelöste Zubereitungen sowie als sprüh- bzw. gefriergetrocknete, wasserfreie Feststoffe vorliegen. Als organische und für den Nahrungsmittelbereich zugelassene Lösungsmittel kommen in diesem Zusammenhang beispielsweise die aliphatischen Alkohole mit 1 bis 6 Kohlenstoffatomen (z.B. Ethanol), niedere Ester oder Polyole (z.B. Glycerin oder Glykole) in Frage.

Aus anwendungstechnischer Sicht haben sich solche pflanzlichen Extrakte und speziell Extrakte von Traubensaat bewährt, die einen Gesamtpolyphenolgehalt von 10 bis 95 und vorzugsweise 20 bis 70 Gew.-% aufweisen, wobei davon bis zu 60 Gew.-% auf die OPC entfallen können. Der Gehalt an Epigallocatechingallat (EPCG) liegt dabei vorteilhafter Weise im Bereich von 2 bis 40 und insbesondere 2 bis 25 Gew.-%.

### Physiologisch aktive ungesättigte Fettstoffe

Ein gemeinsames Kriterium der physiologisch aktiven ungesättigten Fettstoffe, die als Komponente (b) in Betracht kommen, besteht darin, dass sie über einen hinreichend langen Lipidrest und eine ausreichende Zahl von Doppelbindungen verfügen. Für diesen Zweck eignen sich daher insbesondere Fettsäuren die 18 bis 26 Kohlenstoffatome und 2 bis 6 Doppelbindungen aufweisen.

In einer ersten Ausführungsform der Erfindung werden für diesen Zweck konjugierte Linolsäure (CLA), deren Ester - speziell solche mit niederen aliphatischen Alkoholen mit 1 bis 4 Kohlenstoffatomen - oder deren Glyceride, speziell die synthetischen Triglyceride eingesetzt. Dabei handelt es sich um bekannte Stoffe, die üblicherweise durch basenkatalysierte Isomerisierung von Distelöl oder entsprechenden Alkylestern und nachfolgende enzymatische Hydrolyse hergestellt werden. Es hat sich dabei als vorteilhaft erwiesen, wenn die CLA bzw. CLA-Derivate eine bestimmte Spezifikation erfüllen, gemäß der der Acylrest wenigstens 30 Gew.-% t10,c12-Isomere, wenigstens 30 Gew.-% c9,t11-Isomere und in Summe weniger als 1 Gew.-% 8,10-, 11,13- und t,t-Isomere aufweist. Entsprechende Produkte sind beispielsweise unter der Bezeichnung Tonalin^{®} CLA-80 (Cognis) im Handel.

In einer zweiten alternativen Ausführungsform kommen als Komponente (b) auch so genannte omega-3-Fettsäuren in Frage, die typisch 18 bis 26 und insbesondere 20 bis 22 Kohlenstoffatome enthalten und dabei wenigstens 4, bis hin zu 6 Doppelbindungen aufweisen. Auch solche Stoffe sind nach üblichen Methoden der organischen Chemie erhältlich, beispielsweise durch Umesterung von Fischöl, Harnstofffällung der erhaltenen Alkylester und nachfolgende Extraktion mit unpolaren Lösemitteln, wie beschrieben in der deutschen Patentschrift DE 3926658 C2 (Norsk Hydro). Auf diese Weise werden Fettsäuregemische erhalten, die reich an omega-3 (all-Z)-5,8,11,14,17-eicosapentansäure (EPA) C 20 : 5 und (all-Z)-4,7,10,13,16,19-Docosahexansäure (DHA) C 22 : 6. sind. Solche Produkte sind beispielsweise unter der Bezeichnung Omacor^{®} (Pronova) im Handel.

Die physiologisch aktiven Fettstoffe bzw. Fettsäuren können jedoch nicht nur in Form ihrer Niedrigalkylester oder Glyceride, sondern auch ihrer Ester mit Sterolen eingesetzt werden. Die Sterolester haben den Vorteil, dass sie - ähnlich wie die Glyceride - leicht resorbiert und unter physiologischen Bedingungen ebenfalls leicht gespalten werden. Im Gegensatz zu den Glyceriden wird aber mit dem Sterol ein weiterer physiologisch aktiver Wirkstoff freigesetzt. Die Begriffe "Sterol" "Stanol" und "Sterin" sind dabei synonym zu verwenden und bezeichnen Steroide, die nur am C-3 eine Hydroxylgruppe und ansonsten keine Funktionen aufweisen. Zusätzlich können die 27 bis 30 Kohlenstoffatome umfassenden Sterole eine Doppelbindung, vorzugsweise in 5/6-Stellung enthalten. Die im Sinne der Erfindung bevorzugten Verbindungen sind die Ester der CLA oder der omega-3-Fettsäuren mit β-Sitosterol oder dessen Hydrierungsprodukt dem β-Sitostanol.

In Summe bevorzugt sind als Komponente (b) konjugierte Linolsäure (CLA), omega-3-Fettsäuren oder deren Glycerinester, speziell technische Glyceridgemische auf CLA-Basis, die unter der Bezeichnung Tonalin^{®} CLA-TG im Handel erhältlich sind.

Im Hinblick auf die Verbesserung der Bioverfügbarkeit von Koffein insbesondere in Zubereitungen, die Extrakte des Grünen Tees enthalten, hat es sich als besonders vorteilhaft erwiesen, wenn man Mischungen von (a) Extrakten der *Vitis vinifera* ("Grapeseed extract") und (b) konjugierter Linolsäure (CLA) einsetzt. Diese, aber auch alle übrigen Gemische können bezüglich der Komponenten (a) und (b) in einem Gewichtsverhältnis von 90 : 10 bis 10 : 90, vorzugsweise 75 : 25 bis 25 : 75 und insbesondere 60 : 40 bis 40 : 60 eingesetzt werden. Bezogen auf eine Aufnahme von 0,01 bis 1,5 g eines Extraktes von Grünem Tee mit ca. 2 bis 5 Gew.-% Koffein hat sich eine Aufnahme von 0,01 bis 1,75, vorzugsweise 0,02 bis 0,5 und insbesondere 0,05 bis 0,15 g der Pflanzenextrakte der Komponente (a) und 2 bis 8, vorzugsweise 3,4 bis 7 und insbesondere 5,5 bis 6,5 g der ungesättigten Fettstoffe der Komponente (b) als besonders vorteilhaft erwiesen, da auf diese Weise eine besonders hohe und lang anhaltende Konzentration an Koffein erreicht werden konnte.

### Koffeinreiche pflanzliche Extrakte

Ein typisches und besonders bevorzugtes Beispiel für einen Pflanzenextrakt, der über einen hohen Gehalt an Alkaloiden, speziell an Koffein von 1 bis 30, vorzugsweise 1,5 bis 10 und typisch 2 bis 5 Gew.-% verfügt, ist der Extrakt des Grünen bzw. Weißen Tees *(Camellia sinensis).* Die Blätter des Grünen Tees enthalten daneben eine Vielzahl von weiteren Stoffen, wie z.B. Polysaccharide, flüchtige Öle, Vitamine, Mineralien, Purine und insbesondere Polyphenole, bei denen es sich in der Regel um Catechine und Flavonoide handelt und die auch als "Tee-Tannine" bezeichnet werden.

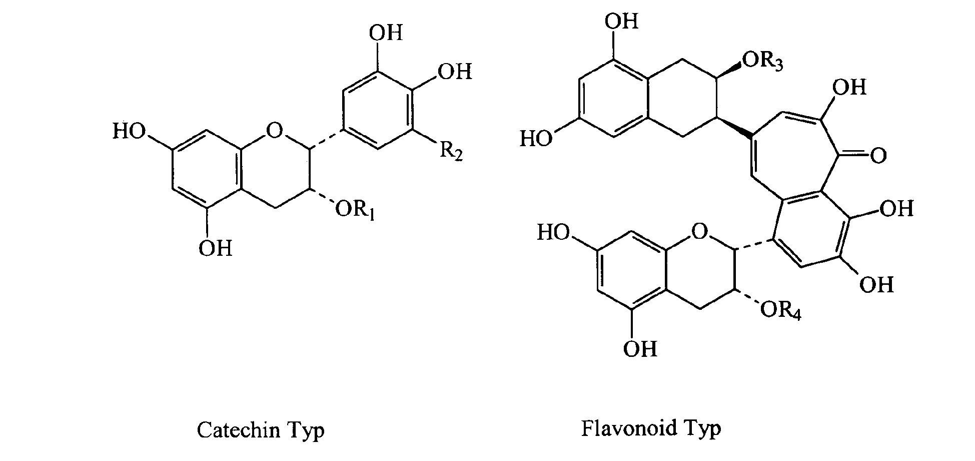

| | R1 | R2 | R3 | R4 |
|---|---|---|---|---|
| (-)-Epicatechin | H | H | | |
| (-) Epigallocatechin | H | OH | | |
| (-) Epicatechin gallate | Galloyl | H | | |
| (-) Epigallocatechin gallate | Galloyl | OH | | |
| Theflavin | | | H | H |
| Theaflavin monogallate A | | | Galloyl | H |
| Theaflavin monogallat B | | | H | Galloyl |
| Theaflavin digallate | | | Galloyl | Galloyl |

Der Gesamtcatechingehalt der Extrakte des Grünen Tees liegt vorzugsweise bei 10 bis 95, vorzugsweise bei 10 bis 50 und insbesondere 10 bis 30 Gew.-%. Der Gehalt an Epigallocatechingallat (EGCG) sollte bei 2 bis 90, vorzugsweise 3 bis 40 und insbesondere 3 bis 15 Gew.-% liegen.

### Gewerbliche Anwendbarkeit

Die Mischungen der Komponenten (a) und (b) können den koffeinreichen pflanzlichen Extrakten direkt zugesetzt werden. Im einfachsten Fall werden sie als Nahrungsmittelergänzungsstoffe frisch aufgebrühtem Tee direkt zugegeben. Es ist jedoch ebenso möglich, eine ternäre Mischung als solche in den Handel zu bringen. Ein solcher Nahrungsmittelergänzungsstoff würde bezogen auf Aktivsubstanz
(a) 20 bis 40, vorzugsweise 25 bis 35 Gew.-% Polyphenole bzw. polyphenolreiche Pflanzenextrakte,
(b) 20 bis 40, vorzugsweise 25 bis 35 Gew.-% physiologisch aktive ungesättigte Fettstoffe sowie
(c) 20 bis 40, vorzugsweise 25 bis 25 Gew.-% koffeinreiche Pflanzenextrakte
mit der Maßgabe enthalten, dass sich die Mengenangaben zu 100 Gew.-% ergänzen. Vorzugsweise würde eine solche Zubereitung
(a) 20 bis 40, vorzugsweise 25 bis 35 Gew.-% Traubensaat Extrakt
(b) 20 bis 40, vorzugsweise 25 bis 35 Gew.-% CLA sowie
(c) 20 bis 40, vorzugsweise 25 bis 25 Gew.-% Grüner Tee Extrakt
ebenfalls mit der Maßgabe enthalten, dass sich die Mengenangaben zu 100 Gew.-% ergänzen.

### Beispiele

### Untersuchung der Bioverfügbarkeit

Die Untersuchungen zur Bioverfügbarkeit von Koffein in Extrakten des Grünen Tees wurden *in vitro* durchgeführt. Das *in vitro* System basierte auf CaCo-2-Zellen, einer menschlichen colon carcinoma Zelllinie, die für diese Zwecke das übliche Testsystem darstellt. Die Zellen wurden in Petrischalen mit einem Durchmesser von 10 cm ausgebracht und kultiviert, bis sie die erforderliche Konzentration aufwiesen. Danach wurden sie weitere 2 bis 3 Tage in der Nährflüssigkeit belassen und dann mit den zu testenden Wirkstoffen versetzt. Anschließend wurden die Zellkulturen nach 1, 3, 5, 7 und 24 h geerntet und die Markerkonzentration, d.h. die Konzentration des Stoffes, dessen Aufnahme untersucht werden sollte, mit Hilfe von HPLC oder GC ermittelt.

### Vergleichsbeispiel V1

### Bioverfügbarkeit von Catechin

Die Aufnahme von Wirkstoffen aus Traubensaat Extrakt wurde an Hand der Markersubstanz Catechin verfolgt. Hierzu wurde zunächst in einer Blindprobe überprüft und sichergestellt, dass die Zellkultur kein Catechin enthielt. Anschließend wurde eine wässrige Maßlösung des Traubensaat-Extraktes der Konzentration 200 mg/ml um den Faktor 1000 verdünnt und den Zellkulturen zugesetzt. Nach 1 h betrug die aufgenommene Menge Catechin 0,69 pmol/µg DNA. Die Kinetik der Aufnahme ist in Tabelle 1 wiedergegeben.

**Tabelle 1**

| **Kinetik der Aufnahme von Catechin nach Zugabe von Traubensaat Extrakt in CaCo-2 Kulturen** | | | | | |
|---|---|---|---|---|---|
| | **V1a** | **V1b** | **V1c** | **V1d** | **V1e** |
| Zeit [h] | 1 | 3 | 5 | 7 | 24 |
| Catechin [pmol/µg DNA] | 0,69 | 0,82 | 1,24 | 0,68 | 1,24 |

### Vergleichsbeispiel V2

### Bioverfügbarkeit von Koffein

Die Aufnahme von Wirkstoffen aus Grünem Tee Extrakt wurde an Hand der Markersubstanz Koffein verfolgt. Hierzu wurde zunächst in einer Blindprobe überprüft und sichergestellt, dass die Zellkultur kein Koffein enthielt. Anschließend wurde eine wässrige Maßlösung des Grünen Tee-Extraktes der Konzentration 222 mg/ml um den Faktor 1000 verdünnt und den Zellkulturen zugesetzt. Nach 1 h betrug die aufgenommene Menge Koffein 0,77 pmol/µg DNA. Die Kinetik der Aufnahme ist in Tabelle 2 wiedergegeben.

**Tabelle 2**

| **Kinetik der Aufnahme von Koffein in CaCo-2 Kulturen** | | | | | |
|---|---|---|---|---|---|
| | **V2a** | **V2b** | **V2c** | **V2d** | **V2e** |
| Zeit [h] | 1 | 3 | 5 | 7 | 24 |
| Catechin [pmol/µg DNA] | 0,77 | 0,89 | 0,62 | 0,62 | 0,58 |

### Beispiel 1

### Bioverfügbarkeit von Catechin, Koffein und Linolsäure

Die Aufnahme von Wirkstoffen aus Mischungen von Grünem Tee Extrakt, Traubensaat Extrakt und CLA wurde an Hand der Markersubstanzen Koffein, Catechin und Linolsäure verfolgt. Hierzu wurde zunächst in einer Blindprobe überprüft und sichergestellt, dass die Zellkultur keine der drei Markersubstanzen enthielt. Anschließend wurde eine wässrige Maßlösung der Mischung enthaltend 222 mg/ml Grüner Tee Extrakt, 200 mg/ml Traubensaat Extrakt und 240 mg/ml CLA um den Faktor 1000 verdünnt und den Zellkulturen zugesetzt. Die Kinetik der Aufnahme ist in Tabelle 3 wiedergegeben.

**Tabelle 3**

| **Kinetik der Aufnahme von Catechin, Koffein und Linolsäure in CaCo-2 Kulturen** | | | | | |
|---|---|---|---|---|---|
| | **1a** | **1b** | **1c** | **1d** | **1e** |
| Zeit [h] | 1 | 3 | 5 | 7 | 24 |
| Catechin [pmol/µg DNA] | 0,48 | 0,25 | 0,23 | 0,17 | 0,04 |
| Koffein [pmol/µg DNA] | 0,48 | 0,57 | 0,68 | 0,67 | 0,50 |
| LS [pmol/µg DNA] | 0,05 | 0,08 | 0,11 | 0,15 | 0,25 |

Die zellulare Aufnahme von Koffein stieg nach der Zugabe während der ersten 7 Stunden kontinuierlich an und zeigte erst nach 24 Stunden einen Abfall. Im Gegensatz dazu wurde unter gleichen Testbedingungen bei Abwesenheit von Traubensaat Extrakt und CLA, d.h. bei alleiniger Zugabe von Grünem Tee Extrakt schon eine Abnahme der Koffeinkonzentration nach 3 h beobachtet. Aus dem Umstand, dass die Spitzenkonzentration des Koffeins im erfindungsgemäßen Beispiel deutlich niedriger lag als im Fall der Zugabe von Grünem Tee Extrakt allein, kann geschlossen worden, dass die Zugabe von Traubensaat Extrakt und CLA zu einer Retardierung, d.h. zu einer verzögerten Aufnahme führt.

## Patentansprüche

1. Verwendung von Gemischen aus
(a) Polyphenolen bzw. pflanzlichen Extrakten, die reich an Polyphenolen sind und
(b) physiologisch aktiven ungesättigten Fettstoffen
zur Verbesserung der Bioverfügbarkeit von Koffein in Zubereitungen mit einem Gehalt an koffeinreichen pflanzlichen Extrakten.

2. Verwendung nach Anspruch 1, **dadurch gekennzeichnet, dass** man als Polyphenole oligomere Procyanolidine (OPC) einsetzt.

3. Verwendung nach den Ansprüchen 1 und/oder 2, **dadurch gekennzeichnet, dass** man als Komponente (a) pflanzlichen Extrakte einsetzt, die ausgewählt sind aus der Gruppe, die gebildet wird von Extrakten der Pinienrinde *(Pinia silvestris)*, Traubensaat *(Vitis vinifera)*, Litchi pericarp *(Litchi chinensis)*, Potentille *(Potentille erecta)*, Ginkgoblätter *(Ginkgo biloba*) und Bilberry bzw. Blaubeere *(Vaccinum myrtillus)* sowie deren Gemischen.

4. Verwendung nach mindestens einem der Ansprüche 1 bis 3, **dadurch gekennzeichnet, dass** man als Komponente (a) pflanzliche Extrakte einsetzt, die einen Gesamtpolyphenolgehalt von 10 bis 95 Gew.-% aufweisen.

5. Verwendung nach mindestens einem der Ansprüche 1 bis 4, **dadurch gekennzeichnet, dass** man als Komponente (b) physiologisch aktive ungesättigte Fettstoffe einsetzt, die Fettsäuren mit 18 bis 24 Kohlenstoffatomen und 2 bis 5 Doppelbindungen darstellen.

6. Verwendung nach mindestens einem der Ansprüche 1 bis 4, **dadurch gekennzeichnet, dass** man als Komponente (b) physiologisch aktive ungesättigte Fettstoffe einsetzt, die Ester von Fettsäuren mit 18 bis 24 Kohlenstoffatomen und 2 bis 5 Doppelbindungen mit Glycerin oder Sterol darstellen.

7. Verwendung nach mindestens einem der Ansprüche 1 bis 6, **dadurch gekennzeichnet, dass** man als Komponente (b) konjugierte Linolsäure (CLA), omega-3-Fettsäuren oder deren Glycerinester einsetzt.

8. Verwendung nach mindestens einem der Ansprüche 1 bis 7, **dadurch gekennzeichnet, dass** man eine Mischung von (a) Extrakten der *Vitis vinifera* ("Grape seed extract") und (b) konjugierter Linolsäure (CLA) einsetzt.

9. Verwendung nach mindestens einem der Ansprüche 1 bis 8, **dadurch gekennzeichnet, dass** man die Komponenten (a) und (b) in einem Gewichtsverhältnis von 90 : 10 bis 10 : 90 einsetzt.

10. Verwendung nach mindestens einem der Ansprüche 1 bis 9, **dadurch gekennzeichnet, dass** man als koffeinreichen pflanzlichen Extrakt den Extrakt des Grünen oder Weißen Tees einsetzt.

11. Nahrungsmittelergänzungsstoffe, bestehend aus
(a) 20 bis 40 Gew.-% Polyphenole bzw. polyphenolreiche Pflanzenextrakte,
(b) 20 bis 40 Gew.-% physiologisch aktive ungesättigte Fettstoffe sowie
(c) 20 bis 40 Gew.-% koffeinreiche Pflanzenextrakte
mit der Maßgabe, dass sich die Mengenangaben zu 100 Gew.-% ergänzen.

12. Nahrungsmittelergänzungsstoffe, bestehend aus
(a) 20 bis 40 Gew.-% Traubesaat Extrakt,
(b) 20 bis 40 Gew.-% CLA sowie
(c) 20 bis 40 Gew.-% Grüner Tee Extrakt
mit der Maßgabe, dass sich die Mengenangaben zu 100 Gew.-% ergänzen.

## Claims

1. Use of mixtures of
(a) polyphenols or plant extracts that are rich in polyphenols and
(b) physiologically active unsaturated fats
for improving the bioavailability of caffeine in preparations containing caffeine-rich plant extracts.

2. Use according to claim 1, wherein oligomeric procyanidins (OPC) are employed as the polyphenols.

3. Use according to claims 1 and/or 2, wherein plant extracts are employed as the component (a) which are selected from the group consisting of extracts of pine bark (*Pinus silvestris*), of grape seeds (*Vitis vinifera*), of lychee pericarp (*Litchi chinensis*), of tormentil (*Potentilla erecta*), of ginkgo leaves (*Ginkgo biloba*) and of bilberry or blueberry (*Vaccinium myrtillus*) and mixtures thereof.

4. Use according to at least one of claims 1 to 3, wherein plant extracts that possess a total polyphenol content of 10 to 95 wt.% are employed as the component (a).

5. Use according to at least one of claims 1 to 4, wherein physiologically active unsaturated fats that are fatty acids containing 18 to 24 carbon atoms and 2 to 5 double bonds are employed as the component (b).

6. Use according to at least one of claims 1 to 4, wherein physiologically active unsaturated fats that are esters of fatty acids containing 18 to 24 carbon atoms and 2 to 5 double bonds with glycerine or sterol are employed as the component (b).

7. Use according to at least one of claims 1 to 6, wherein conjugated linoleic acid (CLA), omega-3 fatty acids or their glycerine esters are employed as the component (b).

8. Use according to at least one of claims 1 to 7, wherein a mixture of (a) extract of *Vitis vinifera* (grape seed extract) and (b) conjugated linoleic acid (CLA) is employed.

9. Use according to at least one of claims 1 to 8, wherein the components (a) and (b) are employed in a weight ratio of 90: 10 to 10: 90.

10. Use according to at least one of claims 1 to 9, wherein the extract of green or white tea is employed as the caffeine-rich plant extract.

11. Food supplement, consisting of
(a) 20 to 40 wt.% polyphenols or polyphenol-rich plant extracts,
(b) 20 to 40 wt.% physiologically active unsaturated fats as well as
(c) 20 to 40 wt.% caffeine-rich plant extracts
with the proviso that the quantities add up to 100 wt.%.

12. Food supplement, consisting of
(a) 20 to 40 wt.% grape seed extract,
(b) 20 to 40 wt.% CLA as well as
(c) 20 to 40 wt.% green tea extract
with the proviso that the quantities add up to 100 wt.%.

## Revendications

1. Utilisation de mélanges
(a) de polyphénols ou d'extraits végétaux, qui sont riches en polyphénols et
(b) de graisses insaturées physiologiquement actives
pour l'amélioration de la biodisponibilité de caféine dans des préparations présentant une teneur en extraits végétaux riches en caféine.

2. Utilisation selon la revendication 1, **caractérisée en ce qu'**on utilise comme polyphénols des procyanidines oligomères (OPC).

3. Utilisation selon les revendications 1 et/ou 2, **caractérisée en ce qu'**on utilise comme composant (a) des extraits végétaux, qui sont choisis dans le groupe formé par les extraits d'écorce de pin sylvestre (Pinus silvestris), de pépin de raisin (Vitis vinifira), de péricarpe de litchi (Litchi chinensis), de potentille (Potentilla erecta), de feuilles de Ginkgo (Ginkgo biloba) et de myrtille (Vaccinium myrtillus) ainsi que leurs mélanges.

4. Utilisation selon au moins l'une quelconque des revendications 1 à 3, **caractérisée en ce qu'**on utilise comme composant (a) des extraits végétaux qui présentent une teneur totale en polyphénols de 10 à 95% en poids.

5. Utilisation selon au moins l'une quelconque des revendications 1 à 4, **caractérisée en ce qu'**on utilise comme composant (b) des graisses insaturées physiologiquement actives, qui représentent des acides gras comprenant 18 à 24 atomes de carbone et 2 à 5 doubles liaisons.

6. Utilisation selon au moins l'une quelconque des revendications 1 à 4, **caractérisée en ce qu'**on utilise comme composant (b) des graisses insaturées physiologiquement actives, qui représentent des esters d'acides gras comprenant 18 à 24 atomes de carbone et 2 à 5 doubles liaisons avec du glycérol ou du stérol.

7. Utilisation selon au moins l'une quelconque des revendications 1 à 6, **caractérisée en ce qu'**on utilise comme composant (b) de l'acide linoléique conjugué (CLA), des acides gras oméga-3 ou leurs esters de glycérol.

8. Utilisation selon au moins l'une quelconque des revendications 1 à 7, **caractérisée en ce qu'**on utilise un mélange (a) d'extraits de Vitis vinifera (extrait de pépin de raisin - "Grape seed extract") et (b) d'acide linoléique conjugué (CLA).

9. Utilisation selon au moins l'une quelconque des revendications 1 à 8, **caractérisée en ce qu'**on utilise les composants (a) et (b) dans un rapport pondéral de 90:10 à 10:90.

10. Utilisation selon au moins l'une quelconque des revendications 1 à 9, **caractérisée en ce qu'**on utilise comme extrait végétal riche en caféine l'extrait de thé vert ou de thé blanc.

11. Complément alimentaire, constitué par
(a) 20 à 40% en poids de polyphénols ou d'extraits végétaux riches en polyphénols,
(b) 20 à 40% en poids de graisses insaturées physiologiquement actives, ainsi que par
(c) 20 à 40% en poids d'extraits végétaux riches en caféine,
à condition que les indications de poids forment 100% en poids.

12. Complément alimentaire, constitué par
(a) 20 à 40% en poids d'extrait de pépin de raisin,
(b) 20 à 40% en poids de CLA, ainsi que par
(c) 20 à 40% en poids d'extrait de thé vert,
à condition que les indications de poids forment 100% en poids.
